# DEMANDE DE BREVET EUROPEEN

(11) **EP 4 738 287 A1**
(43) Date de publication de la demande: **06.05.2026**
(21) Numéro de dépôt: 25196550.5
(22) Date de dépôt: 18.08.2025
(51) Int. Cl.: G06V 20/00, G06V 30/244, G06V 30/40

(54) **AUTHENTIFICATION DE DOCUMENTS SUR LA BASE DE LA DÉTECTION DE POLICES MODIFIÉES**

(30) Priorité: 05.11.2024 FR 2412085
(71) Demandeur: Idemia Public Security France, 92400 Courbevoie (FR)
(72) Inventeur: HSU, Rein-Lien, 92400 Courbevoie (FR); MARTIN, Brian, 92400 Courbevoie (FR)
(74) Mandataire: IPS

(57) **Abrégé**

Il est divulgué un procédé d'authentification d'un document (D), le document comprenant une pluralité de champs de texte, un document authentique comprenant, parmi la pluralité de champs de texte, une pluralité de caractères imprimés dans une police de référence, et au moins un caractère, dont la position est déterminée, étant imprimé dans une police qui est modifiée par rapport à la police de référence,
le procédé comprenant :
- la réception d'une image du document à authentifier,
- l'extraction, à partir de l'image, d'une région d'intérêt contenant le caractère ayant la position déterminée,
- l'évaluation d'écarts entre le caractère contenu dans la région d'intérêt extraite et un modèle de caractère, et
- la détermination de l'authenticité du document sur la base des écarts évalués.

## Description

### Domaine technique

La présente divulgation concerne le domaine de l'authentification de documents et de la détection de fraudes dans des documents, tels que des documents d'identité.

### Art antérieur

Les documents d'identité sont traditionnellement sécurisés par l'intégration d'une série de caractéristiques de sécurité. Ces caractéristiques visent à garantir l'authenticité, l'intégrité et la protection contre la fraude ou la falsification des documents, et donc à distinguer un document authentique d'un document frauduleux. Lors d'un contrôle d'identité, la présence et l'intégrité des caractéristiques de sécurité sont vérifiées afin d'authentifier le document. Les caractéristiques de sécurité peuvent par exemple être des hologrammes, des filigranes, des micro-impressions, de l'encre UV, etc.

Un document, en particulier un document d'identité, comprend généralement à la fois des champs de texte statiques et des champs de texte variables. Les champs de texte statiques comprennent un texte qui ne varie pas en fonction du propriétaire du document, tandis que les champs de texte variables comprennent un texte qui varie en fonction du propriétaire, également appelé Information Personnelle Identifiable. En règle générale, un champ de texte statique ne contient aucune donnée personnelle ou relative à un document, mais peut indiquer le type de données personnelles qui remplissent un champ de texte variable voisin. Dans le cas d'un document d'identité, un champ de texte statique peut contenir des mots tels que « Nom », « Prénom », « Date de naissance », « Date de délivrance », « Signature », etc. Les champs de texte statiques peuvent également comprendre un texte identifiant le type de document et l'autorité émettrice.

Certains documents peuvent comprendre des polices dédiées en tant que caractéristique de sécurité, appelées polices modifiées. La police modifiée peut avoir le même style de police que celle utilisée pour les textes statiques environnants - également appelée police de référence, la police modifiée étant différente mais proche de la police de référence (avec, par exemple, une légère modification apportée à la police de référence) ou avoir un style de police différent.

Les changements entre la première police et la police modifiée peuvent être subtils et nécessiter un examen minutieux et lent lorsque l'authentification du document est effectuée par un opérateur humain. Il est donc nécessaire de trouver une solution rapide et fiable pour l'examen automatique d'une telle caractéristique de sécurité.

Il est connu de [Lu, 2020] un procédé de détection de texte falsifié dans un document qui classe un document comme étant frauduleux ou authentique sur la base d'une Transformée en Cosinus Discrets (DCT) du document suivie d'une DCT inverse appliquée aux coefficients positifs et négatifs de la DCT. Ce procédé ne permet pas de détecter spécifiquement une police altérée, mais vise plutôt à détecter tout changement en général, et non pas spécifiquement un changement de style de police, car il repose sur un changement global de la distribution d'intensité des pixels d'un document qui a été altéré.

### Résumé de l'invention

La présente divulgation vise à améliorer la situation.

En particulier, l'un des objectifs de la présente divulgation est de fournir une solution rapide et fiable pour l'authentification automatique d'un document sur la base de la vérification d'une police de caractères modifiée.

Un autre objectif de la présente divulgation est de fournir un procédé qui puisse s'adapter à divers types de polices modifiées, comprenant divers caractères et divers types de modifications des polices.

En conséquence, un procédé mis en œuvre par ordinateur pour authentifier un document est divulgué, le document comprenant une pluralité de champs de texte, dans lequel un document authentique comprend, parmi la pluralité de champs de texte, une pluralité de caractères imprimés dans une police de référence, et au moins un caractère, ayant une position déterminée, qui est imprimé dans une police qui est modifiée par rapport à la police de référence, le procédé comprenant :
- la réception d'une image du document à authentifier,
- l'extraction, à partir de l'image, d'une région d'intérêt contenant le caractère ayant la position déterminée,
- l'évaluation d'écarts entre le caractère contenu dans la région d'intérêt extraite et un modèle de caractère, et
- la détermination de l'authenticité du document sur la base des écarts évalués.

Dans certains modes de réalisation, le modèle de caractère est un gabarit de référence du caractère imprimé dans la police de référence ou dans la police modifiée, et l'évaluation d'écarts entre le caractère contenu dans la région d'intérêt extraite et le gabarit de référence comprend le calcul de la différence d'intensité entre les deux caractères.

Dans certains modes de réalisation, la détermination de l'authenticité du document est basée sur la détection d'écarts d'intensité ou sur les positions des écarts d'intensité. Dans un mode de réalisation, le modèle de caractère est un gabarit de référence du caractère imprimé dans la police de référence, et l'évaluation d'écarts entre le caractère contenu dans la région d'intérêt extraite et le gabarit de référence comprend en outre la détermination de positions d'extrema de la différence d'intensité entre les deux caractères, et la comparaison des positions déterminées des extrema à des positions de référence des différences. Selon ce mode de réalisation, il est déterminé que le document est authentique lorsqu'une distance entre les positions déterminées des extrema de différence et les positions de référence est inférieure à un seuil déterminé.

Dans un autre mode de réalisation, le modèle de caractère est un gabarit de référence du caractère imprimé dans la police modifiée, et l'évaluation d'écarts entre le caractère contenu dans la région d'intérêt extraite et le gabarit de référence comprend en outre la détermination du fait de savoir si au moins une différence d'intensité dépasse un seuil prédéterminé. Selon ce mode de réalisation, le document est considéré comme étant frauduleux lorsqu'au moins une différence d'intensité dépasse un seuil prédéterminé.

Dans un mode de réalisation, le modèle de caractère est un gabarit de référence du caractère imprimé dans la police de référence ou la police modifiée, et le procédé comprend, avant l'évaluation d'écarts entre le caractère contenu dans la région d'intérêt et le gabarit de référence, un prétraitement de la région d'intérêt pour aligner le caractère contenu dans la région d'intérêt sur le gabarit de référence. Le prétraitement peut comprendre la modification itérative de la région d'intérêt par la mise en œuvre d'une rotation, d'une translation et d'une remise à l'échelle du caractère jusqu'à ce que la région d'intérêt modifiée s'ajuste le mieux au gabarit de référence. Cela permet d'augmenter la fiabilité de la comparaison avec le gabarit de référence.

Dans un mode de réalisation, l'extraction d'une région d'intérêt contenant un caractère comprend l'extraction d'une zone de l'image contenant le caractère, la normalisation de l'intensité de la zone, l'extraction et facultativement, le redimensionnement d'une boîte englobante du caractère, la boîte englobante extraite formant la région d'intérêt.

Dans un mode de réalisation, le procédé comprend en outre :
- le traitement de l'image reçue pour déterminer un type de document,
- l'accès à une base de données comprenant, pour chacun d'une pluralité de types de documents, des descripteurs de données du caractère en fonction de la police modifiée, comprenant au moins la position déterminée dudit caractère, et des descripteurs de données du modèle de caractère, et
- la récupération, à partir de la base de données, des descripteurs de données correspondant au type de document déterminé.

Dans certains modes de réalisation, le modèle de caractère est un gabarit de référence du caractère imprimé dans la police de référence.

Dans certains modes de réalisation, le document comprend plusieurs champs de texte statiques, et le caractère imprimé dans la police modifiée se trouve dans l'un des champs de texte statiques.

Dans certains modes de réalisation, un document authentique comprend au moins deux occurrences du même caractère, au moins une première occurrence du caractère étant imprimée dans la police modifiée, et au moins une deuxième occurrence du caractère étant imprimée dans une police de référence, et le procédé comprend en outre l'acquisition du gabarit de référence à partir du document à authentifier, à une position correspondant à la deuxième occurrence du caractère, et l'acquisition du gabarit de référence à partir de l'image comprend l'extraction d'une zone comprenant le caractère dans la police de référence à partir de l'image, la normalisation de l'intensité de la zone et l'extraction d'une boîte englobante du caractère, la boîte englobante extraite formant le gabarit de référence. Dans certains modes de réalisation, la boîte englobante peut être resserrée autour des contours du caractère contenu dans la région d'intérêt.

Le procédé divulgué permet de vérifier automatiquement une police modifiée en tant que caractéristique de sécurité d'un document, en comparant une région d'intérêt contenant un caractère déterminé qui est censé être imprimé dans la police modifiée (si le document est authentique) à un modèle du caractère. Dans un mode de réalisation, la détermination de l'authenticité du document est basée sur la position des écarts entre les caractères comparés. En conséquence, il suffit de se baser sur les positions de référence des écarts et non, par exemple, sur la forme exacte des caractères comparés. Le procédé n'est donc pas conçu pour un caractère ou un type de modification spécifique, et peut donc s'adapter à une grande variété de types de modifications de polices, par exemple en fonction du type de document (carte d'identité, passeport, visa, permis de conduire, etc.), et en fonction de l'autorité émettrice du document.

En conséquence, lors de l'authentification du document, la région d'intérêt extraite du document peut être soumise à un prétraitement consistant en un alignement des polices (pour rechercher la position de meilleur ajustement) et à une normalisation de l'intensité et de la taille des polices. Lors de l'introduction, un gabarit de référence peut également être créé en procédant à la même extraction d'une région d'intérêt, mais sans l'étape de l'alignement (puisque la position exacte de la police de caractères pour le gabarit de référence est connue et que le modèle acquis lors de l'introduction doit être utilisé à titre de référence). En conséquence, la normalisation de la taille permet de comparer des polices de caractères ayant une largeur et un rapport d'aspect identiques.

Le procédé peut reposer sur l'utilisation d'une base de données de descripteurs de caractères imprimés dans la police modifiée et, facultativement, dans la police de référence pour chacun d'une pluralité de types de documents. À chaque authentification de document, l'autorité de contrôle peut accéder à ladite base de données pour extraire les descripteurs pertinents pour le type de document considéré et effectuer la vérification de la police modifiée sur la base desdits descripteurs. La base de données peut être mise à jour régulièrement (y compris, par exemple, en modifiant le caractère concerné par la police modifiée, sa position ou le type de modification) sans modifier la mise en œuvre du procédé.

Selon un autre objet, il est divulgué un procédé mis en œuvre par ordinateur pour générer une base de données pour l'authentification de documents, comprenant l'ajout à la base de données, pour chacun d'une pluralité de types de documents, de descripteurs de données d'au moins un modèle de caractère et d'au moins un caractère imprimé dans une police modifiée par rapport à une police de référence, comprenant au moins une position déterminée, dans un document authentique, du caractère imprimé dans la police modifiée.

Dans certains modes de réalisation, le procédé de génération de la base de données comprend des étapes préliminaires, pour chaque type de document, comprenant :
- la réception d'une image d'un modèle de document authentique,
- l'extraction, à partir de l'image reçue, d'une région d'intérêt contenant un caractère,
- le traitement de la région d'intérêt extraite pour obtenir un modèle du caractère, et
- l'enregistrement, dans la base de données, de descripteurs de données du gabarit.

Dans certains modes de réalisation, les descripteurs de données du gabarit qui sont enregistrés dans la base de données comprennent le gabarit lui-même.

Selon un autre objet, un produit de programme informatique est divulgué, comprenant des instructions destinées à mettre en œuvre le procédé selon la description ci-dessus, lorsqu'il est exécuté par un ordinateur.

Selon un autre objet, un support d'enregistrement non transitoire lisible par ordinateur est divulgué, sur lequel sont stockées des instructions de code qui, lorsqu'elles sont exécutées par un ordinateur, amènent ledit ordinateur à mettre en œuvre un procédé selon la description ci-dessus.

Selon un autre objet, un système d'authentification de documents est divulgué, comprenant au moins un capteur d'images, conçu pour acquérir une image d'un document à authentifier, une base de données stockant, pour chacun d'une pluralité de types de documents, des descripteurs de données du modèle de caractère et du caractère imprimé dans la police modifiée, comprenant au moins une position déterminée, dans un document authentique, du caractère dans la police modifiée, et un ordinateur, configuré pour recevoir des images acquises par le capteur d'images et pour mettre en œuvre le procédé selon la description ci-dessus.

Dans certains modes de réalisation, les descripteurs de données comprennent en outre au moins l'un des éléments suivants :
- un gabarit de référence du caractère imprimé dans la police modifiée ou imprimé dans la police de référence,
- une position attendue de chaque écart entre le modèle de caractère et le caractère imprimé dans la police modifiée,
- une hauteur, une largeur ou un rapport d'aspect du modèle de caractère,
- des positions attendues d'extrema d'écarts d'intensité entre le caractère dans la police modifiée et le caractère dans la police de référence,
- des valeurs seuils concernant les écarts d'intensité, ou leurs positions, entre un caractère et un gabarit de référence.

### Brève description des dessins

D'autres caractéristiques, détails et avantages apparaîtront dans la description détaillée qui suit et dans les figures, dans lesquelles :
**Figure 1**

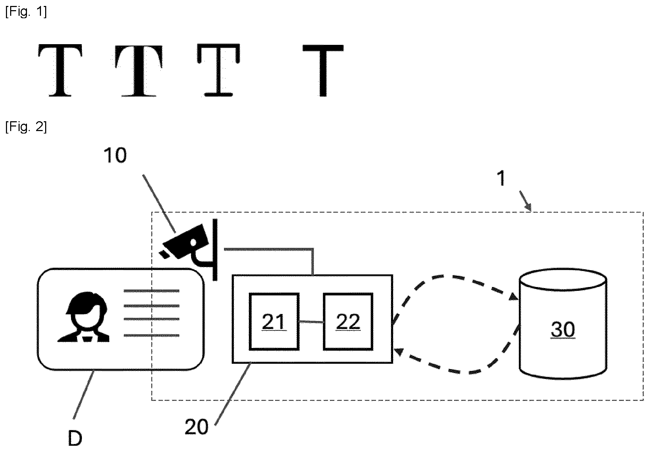

   La figure 1 représente des exemples d'un même caractère (la lettre « T ») imprimé avec différentes polices.
**Figure 2**
   La figure 2 représente schématiquement un système d'authentification de documents selon certains modes de réalisation.
**Figure 3**

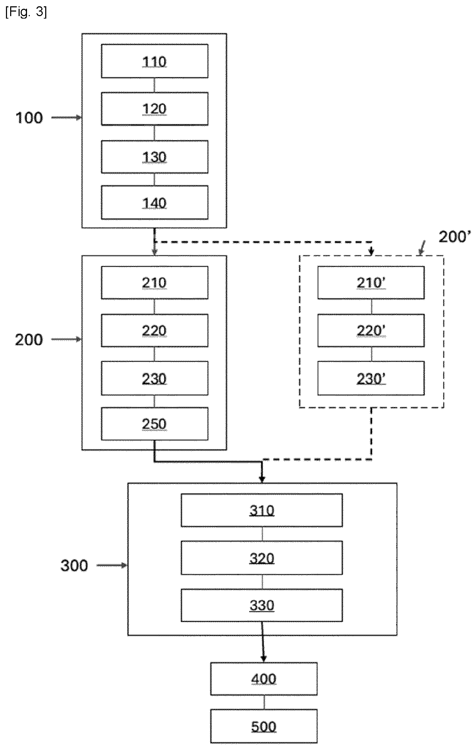

   La figure 3 représente schématiquement les principales étapes d'un procédé d'authentification d'un document, selon certains modes de réalisation.
**Figure 4**

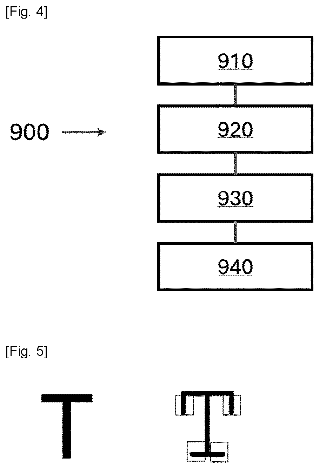

   La figure 4 représente schématiquement les principales étapes d'un procédé de génération d'une base de données pour l'authentification de documents selon certains modes de réalisation.
**Figure 5**
   La figure 5 représente schématiquement un exemple d'écarts entre deux caractères correspondant à des polices différentes.

### Description des modes de réalisation

En référence aux figures, un procédé et un système d'authentification de documents vont maintenant être décrits.

Le document peut être un document délivré par une autorité qui atteste des informations spécifiques au propriétaire, telles que son identité et/ou ses droits. Le document peut par exemple être un document d'identité tel qu'une carte d'identité ou un passeport. D'autres types de documents sont également couverts par la présente divulgation, tels qu'un visa, un permis (par exemple un permis de conduire), une carte d'assurance maladie, une carte de membre, etc. Le document comprend plusieurs champs de texte statiques et plusieurs champs de texte variables, ces derniers pouvant contenir des informations personnelles identifiables.

La composition d'un document, en particulier le nombre et la position des champs de texte, le contenu des champs de texte statiques, le choix de la police de caractères et sa taille, dépend du type de document, le « type » se rapportant à la fois à la nature du document, c'est-à-dire à la nature de l'information ou du droit attesté par le document (par exemple, passeport, visa, permis de conduire), et à l'autorité émettrice du document (par exemple, l'État). A titre d'exemple, une carte d'identité délivrée par un pays peut ne pas avoir la même disposition, les mêmes champs de texte, les mêmes polices de caractères, etc. qu'une carte d'identité délivrée par un autre pays.

Selon la présente divulgation, un document authentique comprend, parmi la pluralité de champs de texte, une pluralité de caractères imprimés dans une police de référence, et au moins un caractère imprimé dans une police modifiée par rapport à la police de référence. Dans la présente divulgation, le terme « caractère » désigne une lettre, un chiffre ou un symbole imprimé sur un document. Le mot « police » fait référence à une conception et à un style cohérents avec lesquels les caractères sont imprimés, alors que les différentes polices peuvent varier en ce qui concerne certains attributs tels que l'espace, la taille, l'espacement et le poids (épaisseur des traits du caractère).

La police modifiée peut être différente de la police de référence. En référence à la figure 1, sont représentées plusieurs occurrences de la même lettre « T » imprimée dans quatre polices de caractères différentes. La police modifiée peut également être une police comprenant de légères modifications apportées à la police de référence, comme par exemple une modification de l'épaisseur ou de la hauteur de la police, ou une ligne traversant la police, etc.

Le caractère imprimé dans la police modifiée est un élément de sécurité du document. En conséquence, ledit caractère se trouve à une position déterminée. La position déterminée peut être une position prédéterminée et constante dans le document. A titre d'exemple, le caractère imprimé dans la police modifiée peut être un caractère déterminé parmi l'une des polices de texte statiques (par exemple, la lettre « E » dans la police de texte statique « NOM »). Dans ce cas, tant le type de caractère (lettre, chiffre ou symbole) que sa position dans le document sont connus et constants. La position du caractère peut également être déterminée conformément à une règle prédéfinie. Dans ce cas, le caractère imprimé dans la police modifiée peut également être un caractère de l'un des champs variables et par conséquent, le type spécifique de caractère peut ne pas être entièrement déterminé ou peut être sélectionné dans une liste. Conformément à des exemples non limitatifs, la règle prédéfinie peut être que le caractère dans la police modifiée corresponde au deuxième chiffre du mois de la date de naissance, ou à la première voyelle trouvée dans un champ variable donné, etc.

En référence à la figure 2, le procédé peut être mis en œuvre par un système d'authentification de documents 1. Le système d'authentification de documents peut être installé dans n'importe quel local où l'identité ou les droits de l'utilisateur doivent être vérifiés. A titre d'exemple, le système d'authentification de documents peut être situé au niveau d'une porte d'embarquement ou au niveau d'un terminal (dans des aéroports, des gares, des ports, etc.), aux douanes, dans des ambassades, dans des commissariats de police, etc. Le système d'authentification de documents 1 comprend un capteur d'images 10, par exemple une caméra, configuré pour acquérir une image du document D. Dans certains modes de réalisation, la caméra est configurée pour acquérir des images des documents à une résolution supérieure à 150 DPI (points par pixel). Le système d'authentification de documents 1 comprend en outre un ordinateur 20, qui comprend au moins un processeur 21 configuré pour mettre en œuvre le procédé divulgué ci-dessous, et une mémoire stockant des instructions de code exécutées par le processeur pour l'exécution du procédé. L'ordinateur 20 peut être installé au même endroit que le capteur d'images 10, c'est-à-dire dans les locaux où l'authentification de documents est mise en œuvre, ou peut être distant et accessible à distance par le biais d'un réseau de télécommunications.

Le système d'authentification de documents 30 comprend en outre une base de données stockant, pour chacun d'une pluralité de types de documents, des données caractérisant le type de document et des données permettant la mise en œuvre du procédé d'authentification. En particulier, la base de données comprend au moins, pour chaque type de document, des descripteurs de données du caractère imprimé dans la police modifiée, qui peuvent comprendre au moins la position dudit caractère. La position peut être exprimé directement, par exemple sous forme de coordonnées dans le document, lorsque la police modifiée se trouve dans un champ de texte statique, ou il peut être exprimé par une règle permettant de récupérer le caractère en fonction de la police modifiée. Comme expliqué plus en détail ci-dessous, la base de données peut également stocker d'autres descripteurs de données relatifs au caractère imprimé dans la police modifiée, ainsi que des descripteurs de données relatifs à un modèle de caractère, par exemple un gabarit de référence du caractère imprimé dans la police de référence.

Des exemples d'un procédé d'authentification d'un document vont maintenant être décrits en référence à la figure 3. Le procédé comprend une première étape 100 d'acquisition et de traitement d'une image du document D à authentifier. Lorsqu'un utilisateur accède aux locaux d'authentification de documents, il peut être invité par un système ou une personne à présenter le document, et le capteur d'images 10 peut capturer une image du document. L'ordinateur 20 reçoit donc, lors d'une étape 110, une image du document D à authentifier qui a été acquise par le capteur d'images.

Le procédé comprend ensuite une étape 200 d'extraction, à partir de l'image reçue, d'une région d'intérêt contenant un caractère correspondant à la position déterminée du caractère imprimé dans la police modifiée, dans un document authentique.

Dans certains modes de réalisation, le système d'authentification de documents 1 peut être configuré pour authentifier plusieurs types de documents. Dans ce cas, le système d'authentification de documents peut avoir à déterminer la position de la région d'intérêt à extraire en fonction du type de document. En conséquence, avant de mettre en œuvre l'étape 200, l'image peut être traitée 120 pour déterminer le type de document auquel elle se rapporte. Ce traitement peut consister à extraire du document des informations permettant d'en déterminer le type. Ces informations peuvent comprendre une identification de la nature du document qui figure sur le document et l'identification de l'autorité émettrice. Avant de déterminer le type de document, le traitement peut également comprendre un traitement de normalisation de l'image, qui peut comprendre l'un d'un recadrage ou d'une segmentation du document dans l'image, ou d'autres opérations de rotation, de redimensionnement et de rendu à plat du document.

Une fois le type de document déterminé, l'ordinateur 20 peut alors accéder 130 à la base de données 30 pour récupérer 140 à partir de la base de données, en fonction du type de document, la position du caractère qui, dans les documents authentiques, est imprimé dans la police modifiée. Comme indiqué ci-dessus, la position peut être explicite ou correspondre à une règle de détermination du caractère dans le document. L'extraction 200 de la région d'intérêt est ensuite réalisée en fonction de ladite position déterminée.

Dans certains modes de réalisation, l'extraction 200 de la région d'intérêt comprend l'extraction 210 d'une zone de l'image contenant le caractère, la normalisation 220 de l'intensité de cette zone (par exemple, pour amener les pixels les plus sombres de la zone à une valeur maximale prédéfinie, et les pixels les plus clairs de la zone à une valeur minimale prédéfinie), et l'extraction 230 d'une boîte englobante autour des contours du caractère contenu dans la zone. La boîte englobante peut être resserrée autour des contours du caractère, c'est-à-dire ne contenir rien d'autre que le caractère lui-même. La taille de la boîte englobante peut également être normalisée. La boîte englobante extraite forme alors la région d'intérêt.

Le procédé comprend ensuite l'évaluation 300 d'écarts entre le caractère contenu dans la région d'intérêt extraite et un modèle de caractère, et la détermination 400 de l'authenticité du document D, au moins sur la base des écarts évalués. Selon des variantes de la présente divulgation, le document peut comprendre plusieurs caractéristiques de sécurité, et la détermination 400 de l'authenticité du document est basée non seulement sur la vérification du caractère dans la police modifiée, mais aussi sur la vérification d'autres caractéristiques de sécurité. Néanmoins, l'évaluation d'écarts entre le caractère et le modèle de caractère peut permettre, à elle seule, de déterminer que le document est frauduleux. Dans ce cas, le procédé peut également comprendre une étape 500 de rejet de l'authentification, d'émission d'une alerte, d'invitation de l'utilisateur à réessayer l'authentification d'un document, etc.

Le modèle de caractère est une donnée représentant la vérité de base pour le caractère imprimé soit dans la police de référence, soit dans la police modifiée. Dans certains modes de réalisation, le modèle de caractère peut être un gabarit de référence du caractère imprimé dans la police de référence ou dans la police modifiée. Un gabarit de référence d'un caractère est une représentation explicite du caractère qui sert de vérité de base pour l'étape d'évaluation des écarts. L'étape d'évaluation des écarts peut également être réalisée sur la base d'une approche d'apprentissage profond, dans laquelle le modèle de caractère n'est pas un modèle unique représentant le caractère, mais est appris lors de l'entraînement du modèle d'apprentissage profond.

Dans certains modes de réalisation, en particulier lorsque le gabarit de référence du caractère est imprimé dans la police de référence, le gabarit de référence peut également être extrait de l'image du document. En effet, un document authentique peut comprendre, dans la pluralité de champs de texte, et en particulier dans la pluralité de champs de texte statiques, une pluralité d'occurrences du même caractère, dont au moins une occurrence est imprimée dans la police de référence et au moins une autre occurrence est imprimée dans la police modifiée. Dans ce cas, le caractère extrait à l'étape 200 peut être comparé à un gabarit de référence obtenu à partir de l'occurrence du même caractère imprimé dans la police de référence.

Dans ce cas, le procédé comprend une étape supplémentaire 200' d'extraction, à partir de l'image, du gabarit de référence utilisé comme modèle de caractère. Les mêmes étapes que celles de l'étape 200 peuvent être effectuées, c'est-à-dire qu'une zone contenant le caractère dans la police de référence peut être extraite 210' de l'image, puis l'intensité de la zone peut être normalisée 220' et une boîte englobante entourant les contours du caractère peut être extraite 230', formant ainsi le gabarit de référence.

Dans certains modes de réalisation, la base de données 30 comprend en outre, pour chaque type de document, une position dans le document où le gabarit de référence peut être extrait, et l'ordinateur récupère ladite position au cours de l'étape 140 avant de procéder à l'extraction 200' du gabarit de référence.

Par ailleurs, le gabarit de référence n'est pas extrait du document, mais peut être stocké dans la base de données 30. Dans ce cas, le gabarit de référence est récupéré par l'ordinateur au cours de l'étape 140, à partir du type de document déterminé.

Dans certains modes de réalisation, par exemple lorsque le caractère dans la police modifiée est un caractère d'un champ de texte variable, et peut donc être choisi parmi une pluralité de caractères différents, la base de données peut stocker un gabarit de référence de chaque caractère, et l'ordinateur peut extraire le gabarit de référence correspondant au caractère extrait du document D sur la base d'une comparaison de ressemblance entre la région d'intérêt extraite contenant le caractère et les gabarits de référence stockés dans la base de données.

Facultativement, avant d'évaluer 300 des écarts entre la région d'intérêt extraite contenant le caractère et le gabarit de référence, le procédé peut comprendre un prétraitement 250 de la région d'intérêt afin d'aligner le caractère contenu dans la région d'intérêt sur le gabarit de référence. Cet alignement peut comprendre une modification itérative de la région d'intérêt par la mise en œuvre d'au moins une rotation, d'une translation et d'une mise à l'échelle, jusqu'à ce que la région d'intérêt modifiée s'ajuste le mieux au gabarit de référence, afin d'améliorer la précision de l'étape d'évaluation ultérieure 300. Ce prétraitement peut prendre en compte des descripteurs de données associés au gabarit de référence, tels que la largeur, le rapport d'aspect et la hauteur de la police, qui peuvent être soit stockés dans la base de données et récupérés à l'étape 140, soit dérivés du gabarit de référence.

L'évaluation des écarts 300 entre la région d'intérêt extraite et le gabarit de référence est effectuée afin de déterminer si le caractère est effectivement imprimé dans la police modifiée et si la modification de la police par rapport à la police de référence est authentique. Cette évaluation est réalisée sur la base des intensités des deux caractères, sans tenir compte de l'arrière-plan de chacun d'entre eux.

Dans certains modes de réalisation, l'évaluation d'écarts 300 comprend le calcul 310 de la différence d'intensité entre les deux caractères et la détermination des positions 320 d'extrema de la différence d'intensité entre les deux caractères. La détermination de la position des extrema permet de ne prendre en compte que les changements de polices, et non les variations potentielles d'intensité qui peuvent subsister entre la région d'intérêt extraite et le gabarit. En référence à la figure 5, des exemples de positions des écarts entre les intensités des deux caractères comparés sont représentés schématiquement (les positions sont indiquées par les carrés sur le caractère de droite).

Lorsque le gabarit de référence est un modèle du caractère dans la police de référence, les positions d'extrema des différences d'intensité entre les deux caractères comparés peuvent être comparées 330 à des positions de référence des écarts entre le modèle modifié et le gabarit de référence, et une distance entre lesdites positions peut être calculée et comparée à un seuil prédéterminé. En effet, dans ce cas, des écarts sont attendus entre la police modifiée et le gabarit de référence, et les positions de ces écarts sont connues. Les positions de référence, ainsi que le(s) seuil(s) de comparaison, eut/peuvent également faire partie des descripteurs stockés dans la base de données pour chaque type de document et récupérés par l'ordinateur à l'étape 140. Le document est alors considéré 400 comme étant authentique lorsque la distance calculée entre les positions d'extrema de différence d'intensité et les positions de référence est inférieure à un seuil déterminé.

Par ailleurs, lorsque le caractère dans la région d'intérêt est comparé à un gabarit de référence du caractère dans la police modifiée, aucun écart n'est attendu. En conséquence, une comparaison est effectuée à l'étape 330 entre les différences d'intensité entre les deux caractères comparés, ou la différence d'intensité maximale, et un seuil prédéterminé, qui peut également être stocké dans la base de données pour chaque type de document et récupéré par l'ordinateur à l'étape 140. Lorsqu'une différence d'intensité supérieure à un seuil déterminé est détectée, le document est considéré comme étant frauduleux.

Selon un autre objet, un procédé 900 pour générer une base de données 30 pour l'authentification de documents est divulguée, en référence à la figure 4. La base de données peut être initialisée, pour chaque type de document, avec la nature du document et une indication de l'autorité émettrice. En outre, le procédé comprend l'ajout 940 à la base de données, pour chaque type de document, de descripteurs de données permettant la mise en œuvre ultérieure du procédé d'authentification, comprenant de descripteurs de données d'au moins un modèle de caractère, et d'au moins un caractère imprimé dans une police modifiée, cette dernière comprenant au moins une position déterminée, dans un document authentique, du caractère imprimé dans la police modifiée.

Dans certains modes de réalisation, les descripteurs de données du modèle de caractère peuvent comprendre une position, dans un document authentique, où un gabarit de référence du caractère imprimé dans la police de référence peut être extrait. Dans d'autres modes de réalisation, les descripteurs de données du modèle de caractère peuvent comprendre un gabarit de référence du caractère imprimé dans la police de référence ou un gabarit de référence du caractère dans une police modifiée. Dans ce cas, la génération de la base de données comprend l'introduction d'au moins un gabarit de référence pour chaque type de document.

Cette introduction peut comprendre la réception 910 d'au moins une image d'un modèle de document authentique. Par « modèle de document authentique », on entend un modèle ou une mise en page standardisé(e) qui décrit la structure et la conception du document. Il comprend des éléments prédéfinis, en particulier les champs de texte statiques du document. L'image reçue peut être traitée pour normaliser l'image, ce qui peut comprendre un recadrage ou une segmentation du document dans l'image, ou d'autres opérations de rotation, de redimensionnement et de rendu à plat du document.

L'introduction peut également comprendre l'extraction 920, à partir de l'image reçue, d'une région d'intérêt comprenant un caractère, et le traitement 930 de ladite région pour obtenir un modèle du caractère, qui sera utilisé comme gabarit de référence lors de la mise en œuvre du procédé d'authentification. Le traitement 930 peut être effectué selon les étapes 200, 200' citées ci-dessus, c'est-à-dire qu'il peut comprendre l'extraction d'une zone contenant le caractère, la normalisation de l'intensité de la zone et l'extraction d'une boîte englobante resserrée autour des contours du caractère, dont la taille peut également être normalisée.

Le gabarit de référence obtenu peut être enregistré dans la base de données. Dans certains modes de réalisation, l'introduction peut également comprendre l'enregistrement, dans la base de données, de descripteurs de données concernant le gabarit de référence, tels que la hauteur, la largeur, le rapport d'aspect, etc. de la police.

Dans certains modes de réalisation, lorsque le gabarit de référence est conforme à la police de référence, la génération de la base de données peut également comprendre l'enregistrement, dans la base de données, de descripteurs de données supplémentaires liés à la police modifiée, qui peuvent comprendre la hauteur, la largeur, le rapport d'aspect, et/ou des descripteurs de données relatifs aux écarts entre le caractère dans la police de référence et le même caractère dans la police modifiée, tels que les positions attendues d'extrema d'écarts d'intensité entre les caractères, et un ou plusieurs seuil(s) concernant lesdites positions.

Lorsque le gabarit de référence est dans la police modifiée, la génération 900 de la base de données peut également comprendre l'enregistrement, dans la base de données, d'une valeur seuil concernant l'écart d'intensité maximal accepté entre les caractères comparés.

### Bibliographie

[Lu, 2020] : Y. Lu et al., « A New Method for Detecting Altered Text in Document Images », International Conference on Pattern Recognition and Artificial Intelligence (ICPRAI), LNCS 12068, pp. 93-108, 2020.

## Revendications

1. Procédé mis en œuvre par ordinateur pour authentifier un document (D), le document comprenant une pluralité de champs de texte,
dans lequel un document authentique comprend, parmi la pluralité de champs de texte, une pluralité de caractères imprimés dans une police de référence, et au moins un caractère, ayant une position déterminée, qui est imprimé dans une police modifiée par rapport à la police de référence,
le procédé comprenant :
- la réception (110) d'une image du document à authentifier,
- l'extraction (200), à partir de l'image, d'une région d'intérêt contenant le caractère ayant la position déterminée,
- l'évaluation (300) d'écarts entre le caractère contenu dans la région d'intérêt extraite et un modèle de caractère, et
- la détermination (400) de l'authenticité du document sur la base des écarts évalués.

2. Procédé selon la revendication 1, dans lequel le modèle de caractère est un gabarit de référence du caractère imprimé dans la police de référence ou dans la police modifiée, et l'évaluation d'écarts (300) entre le caractère contenu dans la région d'intérêt extraite et le gabarit de référence comprend le calcul (310) de la différence d'intensités entre les deux caractères.

3. Procédé selon la revendication 2, dans lequel la détermination (400) de l'authenticité du document est basée sur la détection d'écarts d'intensité ou sur les positions d'écarts d'intensité.

4. Procédé selon la revendication 2 ou 3, dans lequel le modèle de caractère est un gabarit de référence du caractère imprimé dans la police de référence, et l'évaluation d'écarts entre le caractère contenu dans la région d'intérêt extraite et le gabarit de référence comprend en outre la détermination de positions (320) d'extrema de la différence d'intensité entre les deux caractères, et la comparaison (330) des positions déterminées des extrema à des positions de référence des différences.

5. Procédé selon la revendication 4, dans lequel il est déterminé (400) que le document est authentique lorsqu'une distance entre les positions déterminées des extrema de différence et les positions de référence est inférieure à un seuil déterminé.

6. Procédé selon l'une quelconque des revendications précédentes, dans lequel l'extraction d'une région d'intérêt (200, 200') contenant un caractère comprend l'extraction (210, 210') d'une zone de l'image contenant le caractère, la normalisation (220, 220') de l'intensité de la zone, l'extraction et facultativement, le redimensionnement (230, 230') d'une boîte englobante du caractère, la boîte englobante extraite formant la région d'intérêt.

7. Procédé selon l'une quelconque des revendications précédentes, dans lequel le modèle de caractère est un gabarit de référence du caractère imprimé dans la police de référence.

8. Procédé selon l'une quelconque des revendications précédentes, dans lequel le document comprend plusieurs champs de texte statiques, et le caractère imprimé dans la police modifiée se trouve dans l'un des champs de texte statiques.

9. Procédé selon les revendications 7 et 8 en combinaison, dans lequel un document authentique comprend au moins deux occurrences du même caractère, au moins une première occurrence du caractère étant imprimée dans la police modifiée, et au moins une deuxième occurrence du caractère étant imprimée dans une police de référence, et dans lequel le procédé comprend en outre l'acquisition du gabarit de référence à partir du document à authentifier, à une position correspondant à la deuxième occurrence du caractère, et l'acquisition du gabarit de référence à partir de l'image comprend l'extraction (210') d'une zone comprenant le caractère dans la police de référence à partir de l'image, la normalisation (220') de l'intensité de la zone et l'extraction (230') d'une boîte englobante (resserrée autour des contours) du caractère, la boîte englobante extraite formant le gabarit de référence.

10. Procédé mis en œuvre par ordinateur pour générer (900) une base de données pour l'authentification de documents, comprenant l'ajout (940) à la base de données, pour chacun d'une pluralité de types de documents, de descripteurs de données d'au moins un modèle de caractère et d'au moins un caractère imprimé dans une police modifiée par rapport à une police de référence, comprenant au moins une position déterminée, dans un document authentique, du caractère imprimé dans la police modifiée.

11. Système d'authentification de documents (1), comprenant au moins un capteur d'images (10), conçu pour acquérir une image d'un document à authentifier, une base de données (30) stockant, pour chacun d'une pluralité de types de documents, des descripteurs de données du modèle de caractère et du caractère imprimé dans la police modifiée, comprenant au moins une position déterminée, dans un document authentique, du caractère dans la police modifiée, et un ordinateur (20), configuré pour recevoir des images acquises par le capteur d'images et pour mettre en œuvre le procédé selon l'une quelconque des revendications 1 à 9.

12. Système d'authentification de documents (1) selon la revendication précédente, dans lequel les descripteurs de données comprennent en outre au moins l'un des éléments suivants :
- un gabarit de référence du caractère imprimé dans la police modifiée ou imprimé dans la police de référence,
- une position attendue de chaque écart entre le modèle de caractère et le caractère imprimé dans la police modifiée,
- une hauteur, une largeur ou un rapport d'aspect du modèle de caractère,
- des positions attendues d'extrema d'écarts d'intensité entre le caractère dans la police modifiée et le caractère dans la police de référence,
- des valeurs seuils concernant des écarts d'intensité, ou leurs positions, entre un caractère et un gabarit de référence correspondant.
